# EUROPÄISCHE PATENTSCHRIFT

(11) **EP 1 299 450 B1**
(45) Veröffentlichungstag und Bekanntmachung des Hinweises auf die Patenterteilung: **18.05.2005**
(21) Anmeldenummer: 01967141.1
(22) Anmeldetag: 10.07.2001
(51) Int. Cl.: C08G 69/00, C08G 69/04, C08G 69/08, C08G 69/16

(54) **KONTINUIERLICHES VERFAHREN ZUR HERSTELLUNG VON POLYAMIDEN AUS AMINONITRILEN**
CONTINUOUS METHOD FOR PRODUCING POLYAMIDES FROM AMINONITRILES
PROCEDE EN CONTINU DE PRODUCTION DE POLYAMIDES A PARTIR D'AMINONITRILES

(30) Priorität: 11.07.2000 DE 10033544
(43) Veröffentlichungstag der Anmeldung: 09.04.2003
(73) Patentinhaber: BASF AKTIENGESELLSCHAFT, 67056 Ludwigshafen (DE)
(72) Erfinder: BASSLER, Peter, 68519 Viernheim (DE); WINTERLING, Helmut, Dr., 67061 Ludwigshafen (DE); FISCHER, Rolf-Hartmuth, 69121 Heidelberg (DE); LOTH, Wolfgang, 67098 Bad Dürkheim (DE)
(86) Internationale Anmeldenummer: PCT/EP2001/007944
(87) Internationale Veröffentlichungsnummer: WO 2002/008313

(56) Entgegenhaltungen:
- WO-A-00/24808
- DE-A- 19 804 023

## Beschreibung

Die vorliegende Erfindung betrifft ein kontinuierliches Verfahren zur Herstellung von Polyamiden aus Aminonitrilen und Wasser bei erhöhter Temperatur und erhöhtem Druck.

Aus DE-A-19804023 ist ein kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C und einem Druck von 0,1 bis 30 x 10⁶ Pa, wobei ein Produktgemisch erhalten wird,
bekannt.

Dieses Verfahren ermöglicht zwar die Herstellung von Polyamid in guter Qualität, jedoch besteht ein Bedarf nach weiteren Qualitätsverbesserungen.
Ein Problem bei der Qualität von Polyamiden ist die unerwünschte Bildung sekundärer Amine wie in WO 00/24808 beschrieben.

Aufgabe der vorliegenden Erfindung ist die Bereitstellung eines Verfahrens zur Herstellung von Polyamiden aus Aminonitrilen und Wasser, das eine weitere Qualitätsverbesserung im Vergleich zu den bekannten Verfahren gewährleistet.

Die Aufgabe wird erfindungsgemäß gelöst durch ein kontinuierliches verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in Gegenwart eines organischen flüssigen Verdünnungsmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C, und einem Druck von 0,1 bis 30 x 10⁶ Pa, wobei ein Produktgemisch erhalten wird. Weiterhin wird die Aufgabe gelöst durch ein kontinuierliches Verfahren zur Herstellung eines Polyamids durch Umsetzung mindestens eines Aminonitrils mit Wasser, das die folgenden Stufen umfaßt:

(1) Umsetzung mindestens eines Aminonitrils mit Wasser in Gegenwart eines organischen flüssigen Verdünnungsmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C und einem Druck von 0,1 bis 30 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Produktgemisch erhalten wird.

Vorzugsweise umfassen die vorstehenden Verfahren zusätzlich folgende Stufe:
(4) Nachkondensation des Produktgemischs bei einer Temperatur von 200 bis 350 °C und einem Druck, der niedriger ist als der Druck der Stufe 3, wobei die Temperatur und der Druck so gewählt werden, daß eine zweite, Wasser, Ammoniak und gegebenenfalls organisches Verdünnungsmittel enthaltende Gasphase und eine zweite flüssige oder zweite feste Phase oder ein Gemisch aus zweiter flüssiger und zweiter fester Phase, die (das) jeweils das Polyamid enthält, erhalten werden.

Die Aufgabe wird weiterhin gelöst durch ein kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in Gegenwart eines organischen flüssigen Verdünnunsgmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Nachkondensation der ersten flüssigen oder der ersten festen Phase oder des Gemischs aus erster flüssiger und erster fester Phase bei einer Temperatur von 200 bis 350 °C und einem Druck, der niedriger ist als der Druck der Stufe 2, wobei die Temperatur und der Druck so gewählt werden, daß eine zweite, Wasser, Ammoniak und gegebenenfalls organisches Verdünnungsmittel enthaltende Gasphase und eine zweite flüssige oder zweite feste Phase oder ein Gemisch aus zweiter flüssiger und zweiter fester Phase, die (das) jeweils das Polyamid enthält, erhalten werden.

Die prinzipielle Vorgehensweise des erfindungsgemäßen Verfahrens ist in der DE-A-19804023 beschrieben.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind omega-Aminonitrile bevorzugt, wobei unter letzteren insbesondere omega-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als omega-Aminoalkylnitril setzt man weiter bevorzugt lineare omega-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151 543.

Selbstverständlich können auch Gemische mehrerer Aminonitrile oder Gemische eines Aminonitrils mit weiteren Comonomeren, wie Caprolactam oder das untenstehend näher definierte Gemisch eingesetzt werden.

In einer besonderen Ausführungsform, insbesondere wenn man Copolyamide oder verzweigte oder kettenverlängerte Polyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-alpha,omega-Dicarbonsäuren, aromatischen C₈-C₁₂-Dicarbonsäuren und C₅-C₈-Cycloalkandicarbonsäuren,
0 bis 50 bevorzugt 0,1 bis 30 Gew.-% eines alpha,omega-Diamins mit 4 bis 10 Kohlenstoffatomen,
0 bis 50 bevorzugt 0 bis 30 Gew.-% eines alpha,omega-C₂-C₁₂-Dinitrils sowie
0 bis 50 bevorzugt 0 bis 30 Gew.-% eines alpha,omega-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C₁₀-alpha,omega-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als alpha,omega-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Des weiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als alpha,omega-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als alpha,omega-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Als organisches flüssiges Verdünnungsmittel können grundsätzlich alle organischen flüssigen Verdünnungsmittel eingesetzt werden, die die Reaktion im 1. Schritt nicht negativ beeinflussen. Bevorzugt kommen organische flüssige Verdünnungsmittel ausgewählt aus der Gruppe bestehend aus C₁-C₄-Alkanole, wie Methanol, Ethanol, n-Propanol, i-Propanol, Butanole, Glykole, wie Ethylenglykol, Diethylenglykol, Triethylenglykol, Tetraethylenglykol, Ether, wie Methyl-tert.-butylether, Diethylenglykoldiethylether, Tetrahydrofuran, C₆-C₁₀-Alkane, wie n-Octan, n-Decan, C₅-C₁₀-Cycloalkane, wie Cyclohexan, C₆-C₁₀-Aromaten, wie Benzol, Toluol, o-Xylol, m-Xylol, p-Xylol, N-C₁-C₄-Alkyl-Lactame, wie N-Methylpyrrolidon, N-Methylcaprolactam und Lactame mit Ausnahme von Caprolactam, wie Pyrrolidon, in Betracht. Besonders bevorzugt sind C₆-C₁₀-Aromaten, wie Benzol, Toluol, o-Xylol, m-Xylol, p-Xylol, insbesondere Toluol. Es können auch Mischungen solcher organischen flüssigen Verdünnungsmittel eingesetzt werden.

Vorteilhaft kann man organisches flüssiges Verdünnungsmittel in Mengen von 0,1 bis 90 Gew.-%, vorzugsweise 1 bis 70 Gew.-%, bezogen auf die im 1. Schritt eingesetzte Gesamtmenge, eingesetzt werden.

Erfindungsgemäß wird in einer ersten Stufe (Stufe 1) ein Aminonitril mit Wasser in Gegenwart eines organischen flüssigen Verdünnunsgmittels, bei einer Temperatur von ungefähr 90 bis ungefähr 400 °C, vorzugsweise ungefähr 180 bis ungefähr 310 °C und insbesondere bei ungefähr 220 bis ungefähr 270 °C erhitzt, wobei ein Druck von ungefähr 0,1 bis ungefähr 15 x 10⁶ Pa, vorzugsweise ungefähr 1 bis ungefähr 10 x 10⁶ Pa und insbesondere ungefähr 4 bis ungefähr 9 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden.

Erfindungsgemäß setzt man Wasser in einem Molverhältnis von Aminoalkylnitril zu Wasser im Bereich von 1:1 bis 1:10, besonders bevorzugt von 1:2 bis 1:8, ganz besonders bevorzugt von 1:2 bis 1:6, ein, wobei der Einsatz von Wasser im Überschuß, bezogen auf das eingesetzte Aminoalkylnitril bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder -flüssig vorliegt.

Die Abtrennung der Gasphase kann durch den Einsatz von gerührten oder nicht-gerührten Abscheidekesseln oder Kesselkaskaden sowie durch den Einsatz von Verdampferapparaten erfolgen, z.B. durch Umlaufverdampfer oder Dünnschichtverdampfer, wie z.B. durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Nitrilgruppen beschleunigt werden.

Bevorzugt wird bei der zweiphasigen Fahrweise ein Druck gewählt, der größer ist als der zur Massetemperatur der Reaktionsmischung gehörenden Dampfdruck von reinem Wasser, jedoch kleiner als der Gleichgewichtsdampfdruck von Ammoniak.

In einer besonders bevorzugten Ausführungsform der zweiphasigen Fahrweise wird ein senkrecht stehendes Strömungsrohr eingesetzt, das von unten nach oben durchströmt wird und gewünschtenfalls oberhalb des Produktausgangs eine weitere Öffnung zur Gasphasenabtrennung aufweist. Dieser Rohrreaktor kann vollständig oder teilweise mit Katalysatorgranulat gefüllt sein. In einer bevorzugten Ausführungsform ist der senkrecht stehende Reaktor bei zweiphasiger Fahrweise maximal bis zur Phasengrenze mit Katalysatormaterial gefüllt.

In einer anderen, besonders bevorzugten Ausführungsform der ersten Stufe wird der Druck so gewählt, daß das Reaktionsgemisch einphasig flüssig vorliegt, d.h. im Reaktor keine Gasphase vorhanden ist. Bei dieser einphasigen Fahrweise ist die bevorzugte Ausführungsform ein Strömungsrohr, gefüllt ausschließlich mit Katalysatormaterial.

Erfindungsgemäß wird das Aminonitril/Wasser/Verdünnungsmittel-Gemisch vor der Einführung in die erste Stufe mit Hilfe eines Wärmetauschers erhitzt. Selbstverständlich können das Aminonitril und das Wasser auch getrennt voneinander erhitzt und in der ersten Stufe durch den Einsatz von Mischelementen vermischt werden.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

Weiterhin ist es erfindungsgemäß nicht ausgeschlossen, die Umsetzung in Stufe 1 auch in Gegenwart von sauerstoffhaltigen Phosphorverbindungen, insbesondere Phosphorsäure, phosphorige Säure und hypophosphorige Säure sowie deren Alkalimetall- und Erdalkalimetallsalze und Ammoniumsalze wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von omega-Aminonitril zu Phosphorverbindungen im Bereich von 0,01:1 bis 1:1, bevorzugt von 0,01:1 bis 0,1:1 wählt.

Die Umsetzung wird in Stufe 1 in einem Strömungsrohr durchgeführt, das einen Brönsted-Säurekatalysator, ausgewählt aus einem Beta-Zeolith-, Schichtsilikat- oder einem Titandioxid-Katalysator aus 70 bis 100 Gew.-% Anatas und 0 - 30 Gew.-% Rutil, in dem bis zu 40 Gew.-% des Titandioxids durch Wolframoxid ersetzt sein können, enthält. Wird ein sehr reines Aminonitril eingesetzt, so sollte der Anteil an Anatas im Titandioxid-Katalysator möglichst hoch sein. Vorzugsweise wird ein reiner Anatas-Katalysator eingesetzt. Enthält das eingesetzte Aminonitril Verunreinigungen, beispielsweise 1 bis 3 Gew.-% an Verunreinigungen, so wird vorzugsweise ein Titandioxid-Katalysator eingesetzt, der ein Gemisch aus Anatas und Rutil enthält. Vorzugsweise beträgt der Anteil an Anatas 70 bis 80 Gew.-% und der Anteil an Rutil 20 bis 30 Gew.-%. Besonders bevorzugt wird in diesem Fall ein Titandioxid-Katalysator aus etwa 70 Gew.-% Anatas und etwa 30 Gew.-% Rutil eingesetzt. Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 mm, besonders bevorzugt 0,01 bis 0,06 mm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 mm mittlerer Porendurchmesser; 32 N Schneidhärte; 116 m²/g BET-Oberfläche oder 84 Gew.-% Anatas; 16 Gew.-% Rutil; 0,3 ml/g Porenvolumen; 0,03 mm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeous catalysis", VCH Weinheim, 1997, Seiten 98ff beschrieben erfolgen. Der Katalysator kann in jeder beliebigen geeigneten Form eingesetzt werden. Vorzugsweise wird er in Form von Formkörpern, Strängen oder Granulat, insbesondere von Granulat eingesetzt. Das Granulat ist dabei vorzugsweise so groß, daß es vom Produktgemisch gut abtrennbar ist und bei der Umsetzung die Fließfähigkeit des Produkts nicht beeinträchtigt.

Durch die Granulatform des Katalysators ist es möglich, ihn am Austrag der ersten Stufe mechanisch abzutrennen. Beispielsweise werden dazu mechanische Filter oder Siebe am Austrag der ersten Stufe vorgesehen. Wird der Katalysator zudem in der zweiten und/oder dritten Stufe ebenfalls verwendet, so liegt er vorzugsweise in der gleichen Form vor.

Erfindungsgemäß wird das in der ersten Stufe erhaltene Umsetzungsgemisch in Stufe 2 bei einer Temperatur von ungefähr 200 (150) bis ungefähr 350 (400)°C, vorzugsweise einer Temperatur im Bereich von ungefähr 210 (200) bis ungefähr 330 (330)°C und insbesondere im Bereich von ungefähr 230 (230) bis ungefähr 270 (290)°C und einem Druck, der niedriger ist als der Druck in Stufe 1 weiter umgesetzt. Vorzugsweise ist der Druck in der zweiten Stufe mindestens ungefähr 0,5 x 10⁶ Pa niedriger als der Druck in Stufe 1, wobei im allgemeinen der Druck im Bereich von ungefähr 0,1 bis ungefähr 35 x 10⁶ Pa, vorzugsweise ungefähr 0,5 bis ungefähr 15 x 10⁶ Pa und insbesondere ungefähr 2 bis ungefähr 6 x 10⁶ Pa liegt (Werte in Klammern: ohne Katalysator).

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation ggf. mitabgeschiedenen organischen Bestandteile des Destillats, im überwiegendem Maße nicht umgesetztes Aminonitril und gegebenenfalls organisches Verdünnunsgmittel, können in Stufe 1 und/oder Stufe 2 vollständig oder teilweise zurückgeführt werden.

Die Verweilzeit des Umsetzungsgemisch in Stufe 2 unterliegt keinerlei Beschränkungen, beträgt jedoch im allgemeinen ungefähr 10 Minuten bis ungefähr 5 Stunden, vorzugsweise ungefähr 30 Minuten bis ungefähr 3 Stunden.

Die Produktleitung zwischen der ersten und zweiten Stufe enthält ggf. Füllkörper, wie Raschig-Ringe oder Sulzer-Mischelemente, die eine kontrollierte Entspannung des Umsetzungsgemischs in die Gasphase ermöglichen. Dies trifft insbesondere auf die einphasige Betriebsweise zu.

Vorzugsweise enthält auch der Reaktor der zweiten Stufe das erfindungsgemäße Katalysatormaterial, insbesondere in Granulatform. Es wurde gefunden, daß der Reaktor im vergleich zu einem katalysatorfreien Reaktor insbesondere bei höheren Drücken und/oder bei einem großen Wasserüberschuß in der Reaktionsmischung eine weitere Verbesserung der Produkteigenschaften ermöglicht. Temperatur und Druck sollten so gewählt sein, daß die Viskosität der Reaktionsmischung klein genug bleibt, um eine Verstopfung der Katalysatoroberfläche zu vermeiden. Erfindungsgemäß werden auch am Austrag der zweiten Verfahrensstufe Siebe oder Filter eingesetzt, die die Reinheit der Reaktionsmischung garantieren und den Katalysator von der Reaktionsmischung trennen.

In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf, versetzt. Dies geschieht kontinuierlich. Die Menge an zugegebenem Wasser (als Flüssigkeit) liegt vorzugsweise im Bereich von ungefähr 10 bis ungefähr 1500 ml, weiter bevorzugt ungefähr 50 bis ungefähr 500 ml, jeweils bezogen auf 1 kg der ersten flüssigen oder ersten festen Phase oder des Gemischs aus erster flüssiger und erster fester Phase. Durch diesen Wasserzusatz werden in erster Linie die in der Stufe 2 verursachten Wasserverluste kompensiert und die Hydrolyse von 5 Nitrilgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserüberschuß eingesetzt werden kann.

Vorzugsweise wird die Wasser enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können ggf. Mischelemente im Reaktor eingesetzt werden, die die Durchmischung der Komponenten fördern.

Stufe 3 kann bei einer Temperatur von 150 bis 370 °C und einem Druck von 0,1 bis 30 x 10⁶ Pa betrieben werden, beim Vorliegen einer erfindungsgemäßen Katalysatorschüttung können die für Stufe 1 geltenden Bedingungen angewendet werden. Die Temperatur beträgt sonst vorzugsweise 180 bis 300°C, besonders bevorzugt 220 bis 280°C. Der Druck beträgt vorzugsweise 1 bis 10 x 10⁶ Pa, besonders bevorzugt 2 x 10⁶ bis 7 x 10⁶ Pa.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssig-gasförmig, fest-gasförmig oder flüssig/festgasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Nitrilgruppen beschleunigt werden.

Die in dieser Stufe einsetzbaren Apparaturen/Reaktoren können mit denen der Stufe 1, wie oben diskutiert, identisch sein.

Die Verweilzeit in dieser Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 60 bis ungefähr 8 Stunden, besonders bevorzugt ungefähr 60 Minuten bis ungefähr 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 240 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

Auch die vierte Stufe kann mit dem erfindungsgemäßen Katalysator betrieben werden. Es wurde gefunden, daß der Einsatz des Katalysators in der Verfahrensstufe 4 insbesondere dann den Molekulargewichtsaufbau verbessert, wenn die relative Viskosität des Austrags aus der dritten oder - im Falle der dreistufigen Fahrweise - zweiten Stufe kleiner ist als RV = 1,6 - und/oder der molare Nitrilgruppen- und Säureamidgehalt im Polymer größer als 1 % ist, jeweils bezogen auf die Molzahl an eingesetztem Aminonitril.

In einer weiteren Ausführungsform kann erfindungsgemäß auf Stufe 3 verzichtet werden und zur Herstellung des Polyamids die Stufen (1), (2) und (4) ausgeführt werden.

Vorzugsweise wird diese Variante wie folgt durchgeführt:

In Stufe 1 wird wie vorstehend beschrieben umgesetzt.

Das Umsetzungsgemisch wird in Stufe 2 wie vorstehend beschrieben oder bei einer Temperatur im Bereich von ungefähr 220 bis ungefähr 300°C und einem Druck im Bereich von ungefähr 1 bis ungefähr 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 4 wie in Stufe 1 oder bei einer Temperatur im Bereich von ungefähr 220 bis 300 °C und einem Druck im Bereich von ungefähr 10 bis ungefähr 300 x 10³ Pa behandelt, wobei die dabei entstehende zweite, Wasser, Ammoniak und gegebenenfalls organisches Verdünnungsmittel enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

Eine Vorrichtung zur Durchführung des erfindungsgemäßen Verfahrens ist beispielsweise in DE-A-19804023 beschrieben und eine schematische Darstellung aus der dortigen Zeichnung Fig. 1 ersichtlich.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

Als einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch den trifunktionellen Carbonsäuren enthalten sein und umgekehrt.

Die Substanzen liegen in der Menge von 1 bis 50 mmol/kg Polyamid, vorzugsweise 1 bis 35, besonders bevorzugt 1 bis 20 mmol/kg Polyamid vor. Vorzugsweise sind die Substanzen in einer Menge von 3 bis 150, besonders bevorzugt 5 bis 100, insbesondere 10 bis 70 mmol/kg Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatischaliphatisch sein, beispielsweise kann m-Xylylendiamin eingesetzt werden. Die genannten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunktionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine (c) werden vorzugsweise in Mengen von 1 bis 55, besonders bevorzugt 1 bis 30, insbesondere 1 bis 15 mm/kg Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschreiben in der EP-A-0 284 968) und/oder der Extraktion mit einem Aminonitril, wie 6-Aminocapronitril, unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen. Als Kautschuke, die die Zähigkeit der Blends erhöhen, seien z.B. folgende genannt:
EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit g-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, a-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden. Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Ferner betrifft die vorliegende Erfindung ein Polyamid, herstellbar nach einem der Verfahren.

Die Erfindung wird nachstehend anhand von Beispielen näher erläutert.

### Beispiele

### Analytik

Die relative Viskosität (RV) als Maß für den Molekulargewichtsaufbau und Polymerisationsgrad wurde in 1 Gew.-% Lösung aus extrahiertem Material in 96 Gew.-%iger Schwefelsäure bei 25°C mittels eines Viskosimeters nach Ubbelohde bestimmt.

Die Bestimmung sekundärer Amine erfolgte nach der Totalhydrolyse der Probe in wäßriger Chlorwasserstoffsäure. Die Identifizierung der Spezies mit sekundären Amineinheiten erfolgte nach dem in WO 00/24808 ausführlich beschriebenen verfahren. Das Hydrolyseprodukt Iminobishexansäure, das ein Maß für die Anzahl der Verzweigungsprodukte in der Polymerkette ist, wurde mit N-Dimethylformamid-dimethylacetal derivatisiert, um es gaschromatographisch quantitativ nachzuweisen. Die Anzahl an Verzweigungen wurde dann in Milliäquivalenten der Iminobishexansäure (IBHA) pro Kilogramm Polymer bestimmt.

Zur Extraktion wurden 100 Gew.-Teile Polymer mit 400 Gew.-Teilen vollentsalztem Wasser bei einer Temperatur von 100°C für eine Dauer von 32 Stunden unter Rückfluß gerührt bzw. extrahiert und nach Entfernen des Wassers milde, das heißt ohne Nachkondensation, bei einer Temperatur von 100°C für eine Zeitdauer von 20 Stunden im Vakuum getrocknet.

Die Beispiele und Vergleichsbeispiele wurden in einer Apparatur gemäß Figur 1 von DE-A-19804023 mit Aminocapronsäurenitril (ACN) und Wasser (H₂O) als Reaktanden durchgeführt. Als organisches Verdünnungsmittel wurde Ethanol (EtOH) verwendet. Die Reaktanden und das organische Verdünnungsmittel wurden in der Vorlage V der genannten Apparatur vorgelegt.

Die erste Verfahrensstufe (1) mit einem Leervolumen von 1 Liter und einer Innenlänge von 1000 mm wurde mit Titandioxid-Stranggranulat, das gemäß: Ertl, Knözinger, Weitkamp:" Handbook of heterogeneous catalysis", VCH Weinheim, 1997; Seite 98ff hergestellt worden, gefüllt. Das Stranggranulat bestand zu 100% aus TiO₂, welches in der sogenannten Anatas-Modifikation vorlag, und hatte eine Stranglänge zwischen 2 und 14 mm, eine Strangdicke von ca. 2 mm und eine spezifische Oberfläche von 110 m²/g.

Als zweite Stufe (2) wurde ein 2 Liter fassender Abscheidekessel eingesetzt.

Die dritte Stufe (3) mit einem Leervolumen von 1 Liter und einer Innenlänge von 1000 mm wurde mit dem unter Verfahrensstufe (1) beschriebenen Titandioxid-Stranggranulat gefüllt. In diesem Strömungsrohr konnte das Reaktionsgemisch noch mit Wasser aus einer Vorlage (siehe genannte Figur 1) vermischt werden.

Die vierte Stufe (4) bestand wiederum aus einem Abscheidekessel (Volumen 5 Liter), aus dem die hergestellte Polymerschmelze mit Hilfe einer Zahnradpumpe strangförmig ausgefahren wurde (A).

Die Ergebnisse der Beispiele und Vergleichsbeispiele sind aus der nachfolgenden Tabelle ersichtlich. In der Tabelle haben die Abkürzungen folgende Bedeutung:
Als Durchsatz D wird der Massestrom der Reaktionsmischung aus der Vorlage durch die erste Verfahrensstufe bezeichnet.

Zur Vergleichbarkeit der Beispiele wird die Belastung der ersten verfahrensstufe mit ACN angegeben. Diese ergibt sich aus dem Quotienten des Durchsatzes von ACN (kg/h) in Stufe 1 und des Leervolumens der ersten Stufe (Liter).

Der Wasserzusatz WZ in die dritte Verfahrensstufe wird auf den Durchsatz der Reaktionsmischung in die erste verfahrensstufe bezogen und in Prozenten angegeben.

In der Tabelle stehen die bei den Temperatur (T)- und Druckangaben (P) angeführten Ziffern 1,2,3 und 4 für die erste, zweite, dritte und vierte Stufe der Apparatur.

Der IBHG-Gehalt bezeichnet die Anzahl an Verzweigungen in Milliäquivalenten der Iminobishexansäure (IBHA) pro Kilogramm Polymer.

Die Verweilzeit der Reaktionsmischung in der zweiten Stufe betrug in allen Beispielen 1h. Hierfür wurde bei variierenden Durchsätzen in der ersten Stufe die Füllhöhe in der zweiten Stufe angepasst. Die Verweilzeit in der vierten Stufe betrug in allen Beispielen 5 h.

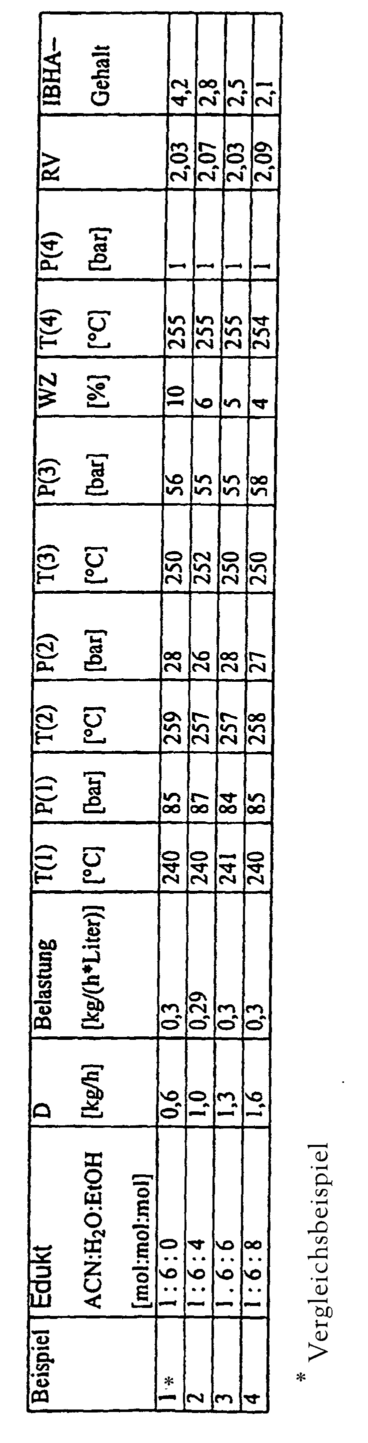

## Patentansprüche

1. Kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in Gegenwart eines organischen flüssigen Verdünnungsmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C und einem Druck von 0,1 bis 30 x 10⁶ Pa, wobei ein Produktgemisch erhalten wird.

2. Kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in Gegenwart eines organischen flüssigen Verdünnungsmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C und einem Druck von 0,1 bis 30 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Produktgemisch erhalten wird.

3. verfahren nach Anspruch 1 oder 2, das zusätzlich folgende Stufe umfaßt:
(4) Nachkondensation des Produktgemischs bei einer Temperatur von 200 bis 350 °C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

4. Kontinuierliches Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in Gegenwart eines organischen flüssigen Verdünnungsmittels bei einer Temperatur von 90 bis 400 °C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Nachkondensation der ersten flüssigen oder der ersten festen Phase oder des Gemischs aus erster flüssiger und erster fester Phase bei einer Temperatur von 200 bis 350 °C und einem Druck, der niedriger ist als der Druck der Stufe 2, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

5. Verfahren nach einem der Ansprüche 1 bis 4, wobei in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

6. Verfahren nach einem der Ansprüche 1 bis 5, wobei die Umsetzung gemäß Stufe 1 mit einem Molverhältnis von Aminonitril zu Wasser von 1:1 bis 1:30 erfolgt.

7. Verfahren nach einem der Ansprüche 1 bis 6, wobei in Stufe 3 die gasförmige oder flüssige Phase, die Wasser enthält, in einer Menge von 50 bis 1500 ml Wasser pro 1 kg erste flüssige oder erste feste Phase oder Gemisch aus erster flüssiger und erster fester Phase zugesetzt wird.

8. Verfahren nach einem der Ansprüche 1 bis 7, wobei mindestens eine der in den jeweiligen Stufen erhaltenen Gasphasen in mindestens eine der vorhergehenden Stufen zurückgeführt wird.

9. Verfahren nach einem der Ansprüche 1 bis 8, wobei als Aminonitril ein w-Aminoalkylnitril mit einem Alkylenrest (-CH₂-) von 4 bis 12 C-Atomen oder ein Aminoalkylarylnitril mit 8 bis 13 C-Atomen umgesetzt wird.

10. Verfahren nach einem der Ansprüche 1 bis 9, wobei folgendes Gemisch eingesetzt wird:
von 50 bis 99,99 Gew.-% 6-Aminocapronitril,
von 0,01 bis 50 Gew.-% mindestens einer Dicarbonsäure, ausgewählt aus der Gruppe bestehend aus aliphatischen C₄-C₁₀-a, w-Dicarbonsäuren, aromatischen C₈-C₁₂-Dicarbonsäuren und C₅-C₈-Cycloalkandicarbonsäuren,
von 0 bis 50 Gew.-% eines a,w-Diamins mit 4 - 10 Kohlenstoffatomen,
von 0 bis 50 Gew.-% eines a,w-C₂-C₁₂-Dinitrils sowie
von 0 bis 50 Gew.-% einer a,w-C₅-C₁₂-Aminosäure oder des entsprechenden Lactams,
von 0 bis 10 Gew.-% mindestens einer anorganischen Säure oder deren Salz,
wobei die Summe der einzelnen Gew.-%-Angaben 100 % beträgt.

11. Verfahren nach einem der Ansprüche 1 bis 10, wobei man ein organisches flüssiges Verdünnungsmittel einsetzt ausgewählt aus der Gruppe bestehend aus C₁-C₄-Alkanole, Glykole, Ether, C₆-C₁₀-Alkane, C₅-C₁₀-Cycloalkane, C₆-C₁₀-Aromaten, N-C₁-C₄-Alkyl-Lactame und Lactame mit Ausnahme von Caprolactam.

12. Verfahren nach einem der Ansprüche 1 bis 11, wobei man ein organisches flüssiges Verdünnungsmittel ausgewählt aus der Gruppe bestehend aus Benzol, Toluol, o-Xylol, m-Xylol und p-Xylol einsetzt.

13. Verfahren nach einem der Ansprüche 1 bis 12, wobei man das organische flüssige Verdünnungsmittel in Mengen von 0,1 bis 90 Gew.-%, bezogen auf das in der 1. Stufe eingesetzte Gesamtgemisch, einsetzt.

14. Polyamid, herstellbar nach einem Verfahren gemäß einem der Ansprüche 1 bis 13.

## Claims

1. A continuous process for preparing a polyamide by reacting at least one aminonitrile with water, which comprises:
(1) reacting at least one aminonitrile with water in the presence of an organic liquid diluent at from 90 to 400°C and from 0.1 to 35 x 10⁶ Pa in a flow tube containing a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, to obtain a reaction mixture,
(2) further reacting the reaction mixture at from 150 to 400°C and a pressure which is lower than the pressure in stage 1 in the presence of a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, the temperature and pressure being selected so as to obtain a first gas phase and a first liquid phase or a first solid phase or a mixture of first solid and first liquid phases and so that the first gas phase is separated from the first liquid phase or first solid phase or from the mixture of first liquid and first solid phases, and
(3) admixing the first liquid or the first solid phase or the mixture of first liquid and first solid phases with a gaseous or liquid phase comprising water at from 150 to 370°C and from 0.1 to 30 x 10⁶ Pa, to obtain a product mixture.

2. A continuous process for preparing a polyamide by reacting at least one aminonitrile with water, which comprises:
(1) reacting at least one aminonitrile with water in the presence of an organic liquid diluent at from 90 to 400°C and from 0.1 to 35 x 10⁶ Pa in a flow tube containing a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, to obtain a reaction mixture,
(2) further reacting the reaction mixture at from 150 to 400°C and a pressure which is lower than the pressure in stage 1 in the presence of a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, the temperature and pressure being selected so as to obtain a first gas phase and a first liquid phase or a first solid phase or a mixture of first solid and first liquid phases and so that the first gas phase is separated from the first liquid phase or first solid phase or from the mixture of first liquid and first solid phases, and
(3) admixing the first liquid or the first solid phase or the mixture of first liquid and first solid phases with a gaseous or liquid phase comprising water at from 150 to 370°C and from 0.1 to 30 x 10⁶ Pa in a flow tube containing a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, to obtain a product mixture.

3. A process as claimed in claim 1 or 2, further comprising the following stage:
(4) postcondensing the product mixture at from 200 to 350°C and a pressure which is lower than the pressure in stage 3, the temperature and pressure being selected so as to obtain a second, water- and ammonia-comprising gas phase and a second liquid or second solid phase or a mixture of second liquid and second solid phases, which each comprise the polyamide.

4. A continuous process for preparing a polyamide by reacting at least one aminonitrile with water, which comprises:
(1) reacting at least one aminonitrile with water in the presence of an organic liquid diluent at from 90 to 400°C and from 0.1 to 35 x 10⁶ Pa in a flow tube containing a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, to obtain a reaction mixture,
(2) further reacting the reaction mixture at from 150 to 400°C and a pressure which is lower than the pressure in stage 1 in the presence of a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide, the temperature and pressure being selected so as to obtain a first gas phase and a first liquid phase or a first solid phase or a mixture of first solid and first liquid phases and so that the first gas phase is separated from the first liquid phase or first solid phase or from the mixture of first liquid and first solid phases, and
(3) postcondensing the first liquid or the first solid phase or the mixture of first liquid and first solid phases at from 200 to 350°C and a pressure which is lower than the pressure in stage 2, the temperature and pressure being selected so as to obtain a second, water- and ammonia-comprising gas phase and a second liquid or second solid phase or a mixture of second liquid and second solid phases, which each comprise the polyamide.

5. A process as claimed in any of claims 1 to 4, wherein the temperature and pressure in stage 1 or in stage 3 or in both stage 1 and stage 3 are selected so as to obtain a liquid or a solid phase or a mixture of liquid and solid phases and a gaseous phase and so that the gaseous phase is separated off.

6. A process as claimed in any of claims 1 to 5, wherein the reaction of stage 1 is carried out using a molar ratio from 1:1 to 1:30 for aminonitrile to water.

7. A process as claimed in any of claims 1 to 6, wherein in stage 3 the gaseous or liquid phase which comprises water is added in an amount from 50 to 1500 ml of water per 1 kg of first liquid or first solid phase or mixture of first liquid and first solid phases.

8. A process as claimed in any of claims 1 to 7, wherein at least one of the gas phases obtained in the respective stages is recycled into at least one of the preceding stages.

9. A process as claimed in any of claims 1 to 8, wherein the aminonitrile used is an ω-aminoalkyl nitrile having an alkylene moiety (-CH₂-) of from 4 to 12 carbon atoms or an aminoalkylaryl nitrile having from 8 to 13 carbon atoms.

10. A process as claimed in any of claims 1 to 9, wherein the following mixture is used:
from 50 to 99.99% by weight of 6-aminocapronitrile,
from 0.01 to 50% by weight of at least one dicarboxylic acid selected from the group consisting of aliphatic C₄-C₁₀-α,ω-dicarboxylic acids, aromatic C₈-C₁₂-dicarboxylic acids and C₅-C₈-cycloalkanedicarboxylic acids,
from 0 to 50% by weight of an α,ω-diamine having 4 - 10 carbon atoms,
from 0 to 50% by weight of an α,ω-C₂-C₁₂-dinitrile and
from 0 to 50% by weight of an α,ω-C₅-C₁₂-amino acid or of the corresponding lactam,
from 0 to 10% by weight of at least one inorganic acid or salt thereof,
the individual weight percentages adding up to 100%.

11. A process as claimed in any of claims 1 to 10, wherein the organic liquid diluent used is selected from the group consisting of C₁-C₄-alkanols, glycols, ethers, C₆-C₁₀-alkanes, C₅-C₁₀-cycloalkanes, C₆-C₁₀-aromatics, N-C₁-C₄-alkyllactams and lactams except caprolactam.

12. A process as claimed in any of claims 1 to 11, wherein the organic liquid diluent used is selected from the group consisting of benzene, toluene, o-xylene, m-xylene and p-xylene.

13. A process as claimed in any of claims 1 to 12, wherein the organic liquid diluent is used in amounts from 0.1 to 90% by weight, based on the total mixture used in the first stage.

14. A polyamide preparable by a process as claimed in any of claims 1 to 13.

## Revendications

1. Procédé continu de préparation d'un polyamide par réaction d'au moins un aminonitrile avec de l'eau, qui comporte les étapes suivantes :
(1) une réaction d'au moins un aminonitrile avec de l'eau en présence d'un diluant liquide organique à une température de 90 à 400°C et à une pression de 0,1 à 35 x 10⁶ Pa dans un tube d'écoulement qui contient un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids de dioxyde de titane peuvent être remplacés par de l'oxyde de tungstène, un mélange réactionnel étant obtenu,
(2) une réaction ultérieure du mélange réactionnel à une température de 150 à 400°C et à une pression inférieure à la pression de l'étape 1, qui peut être effectuée en présence d'un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de façon qu'une première phase gazeuse et une première phase liquide ou une première phase solide ou un mélange d'une première phase solide et d'une première phase liquide soient obtenus et que la première phase gazeuse soit isolée de la première phase liquide ou de la première phase solide ou du mélange de la première phase liquide et de la première phase solide, et
(3) une addition à la première phase liquide ou à la première phase solide ou au mélange de la première phase liquide et de la première phase solide d'une phase gazeuse ou liquide qui contient de l'eau, à une température de 150 à 370°C et à une pression de 0,1 à 30 x 10⁶ Pa, un mélange produit étant obtenu.

2. Procédé continu de préparation d'un polyamide par réaction d'au moins un aminonitrile avec de l'eau, qui comprend les étapes suivantes :
(1) une réaction d'au moins un aminonitrile avec de l'eau en présence d'un diluant liquide organique à une température de 90 à 400°C et à une pression de 0,1 à 35 x 10⁶ Pa dans un tube d'écoulement qui contient un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, un mélange réactionnel étant obtenu,
(2) une réaction ultérieure du mélange réactionnel à une température de 150 à 400°C et à une pression inférieure à la pression de l'étape 1, qui peut être effectuée en présence d'un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de façon qu'une première phase gazeuse et une première phase liquide ou une première phase solide ou un mélange d'une première phase solide et d'une première phase liquide soient obtenus et que la première phase gazeuse soit isolée de la première phase liquide ou de la première phase solide ou du mélange de la première phase liquide et de la première phase solide, et
(3) une addition à la première phase liquide ou à la première phase solide ou au mélange de la première phase liquide et de la première phase solide d'une phase gazeuse ou liquide qui contient de l'eau, à une température de 150 à 370°C et à une pression de 0,1 à 30 x 10⁶ Pa dans un tube d'écoulement qui contient un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, un mélange produit étant obtenu.

3. Procédé suivant la revendication 1 ou 2, qui comprend en supplément les étapes suivantes :
(4) une postcondensation du mélange produit à une température de 200 à 350°C et à une pression qui est plus basse que la pression de l'étape (3), la température et la pression étant choisies de façon qu'une deuxième phase gazeuse contenant de l'eau et de l'ammoniac et une deuxième phase liquide ou une deuxième phase solide ou un mélange d'une deuxième phase liquide et d'une deuxième phase solide, qui contient respectivement le polyamide, soient obtenus.

4. Procédé continu de préparation d'un polyamide par réaction d'au moins un aminonitrile avec de l'eau, qui comprend les étapes suivantes :
(1) une réaction d'au moins un aminonitrile avec de l'eau en présence d'un diluant liquide organique à une température de 90 à 400°C et à une pression de 0,1 à 35 x 10⁶ Pa dans un tube d'écoulement qui contient un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, un mélange réactionnel étant obtenu,
(2) une réaction ultérieure du mélange réactionnel à une température de 150 à 400°C et à une pression inférieure à la pression de l'étape 1, qui peut être effectuée en présence d'un catalyseur à base d'acide de Brönsted, choisi parmi un catalyseur à base de bêta-zéolite, de silicate lamellaire ou de dioxyde de titane à base de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de façon qu'une première phase gazeuse et une première phase liquide ou une première phase solide ou un mélange d'une première phase solide et d'une première phase liquide soient obtenus et que la première phase gazeuse soit isolée de la première phase liquide ou de la première phase solide ou du mélange de la première phase liquide et de la première phase solide, et
(3) une postcondensation de la première phase liquide ou de la première phase solide ou du mélange de la première phase liquide et de la première phase solide à une température de 200 à 350°C et à une pression qui est inférieure que la pression de l'étape 2, la température et la pression étant choisies de façon qu'une deuxième phase gazeuse contenant de l'eau et de l'ammoniac et une deuxième phase liquide ou une deuxième phase solide ou un mélange d'une deuxième phase liquide et d'une deuxième phase solide, qui contient respectivement le polyamide, soient obtenus.

5. Procédé suivant l'une des revendications 1 à 4, dans lequel dans l'étape 1 ou dans l'étape 3 ou aussi bien dans l'étape 1 que dans l'étape 3 la température et la pression sont choisies de façon qu'une phase liquide ou une phase solide ou un mélange de phase liquide et de phase solide et une phase gazeuse soient obtenus et que la phase gazeuse soit isolée.

6. Procédé suivant l'une des revendications 1 à 5, dans lequel la réaction selon l'étape 1 a lieu avec un rapport molaire entre l'aminonitrile et l'eau de 1/1 à 1/30.

7. Procédé suivant l'une des revendications 1 à 6, dans lequel, dans l'étape 3, la phase gazeuse ou liquide qui contient de l'eau est ajoutée en une quantité de 50 à 1500 ml d'eau par kg de la première phase liquide ou de la première phase solide ou du mélange de la première phase liquide et de la première phase solide.

8. Procédé suivant l'une des revendications 1 à 7, dans lequel au moins une des phases gazeuses obtenues dans les étapes respectives est recyclée dans au moins une des étapes précédentes.

9. Procédé suivant l'une des revendications 1 à 8, dans lequel, comme aminonitrile, on fait réagir un w-aminoalkylnitrile comportant un radical alkylène (-CH₂-) de 4 à 12 atomes de C ou un aminoalkylarylnitrile comportant 8 à 13 atomes de C.

10. Procédé suivant l'une des revendications 1 à 9, dans lequel on met en oeuvre le mélange suivant :
de 50 à 99,99% en poids de 6-aminocapronitrile,
de 0,01 à 50% en poids d'au moins un acide dicarboxylique, choisi parmi le groupe constitué des acides a,w-dicarboxyliques aliphatiques en C₄-C₁₀, des acides dicarboxyliques aromatiques en C₈-C₁₂ et des acides cycloalcanedicarboxyliques en C₅-C₈,
de 0 à 50% en poids d'une a,w-diamine comportant 4 à 10 atomes de carbone,
de 0 à 50% en poids d'un a,w-dinitrile en C₂-C₁₂, ainsi que
de 0 à 50% en poids d'un a,w-aminoacide en C₅-C₁₂ ou du lactame correspondant,
de 0 à 10% en poids d'au moins un acide inorganique ou d'un sel de celui-ci,
la somme des différentes indications en % en poids donnant 100%.

11. Procédé suivant l'une des revendications 1 à 10, dans lequel on met en oeuvre un diluant liquide organique choisi parmi le groupe constitué des alcanols en C₁-C₄, des glycols, des éthers, des alcanes en C₆-C₁₀, des cycloalcanes en C₅-C₁₀, des substances aromatiques en C₆-C₁₀, des N-alkyl en C₁-C₄-lactames et des lactames, à l'exception du caprolactame.

12. Procédé suivant l'une des revendications 1 à 11, dans lequel on met en oeuvre un diluant liquide organique choisi parmi le groupe constitué du benzène, du toluène, du o-xylène, du m-xylène et du p-xylène.

13. Procédé suivant l'une des revendications 1 à 12, dans lequel on met en oeuvre le diluant liquide organique en des quantités de 0,1 à 90% en poids, par rapport au mélange total mis en oeuvre dans l'étape 1.

14. Polyamide, qui peut être préparé selon un procédé suivant l'une des revendications 1 à 13.
